(19) **Europäisches Patentamt European Patent Office Office européen des brevets**

(11) **EP 3 247 523 B1**

(12) **EUROPEAN PATENT SPECIFICATION**

(45) Date of publication and mention
of the grant of the patent:
**30.09.2020 Bulletin 2020/40**

(21) Application number: **15820736.5**

(22) Date of filing: **14.12.2015**

(51) Int Cl.:
***B23K 9/095*** *(2006.01)*     ***B23K 9/12*** *(2006.01)*
***B23K 9/32*** *(2006.01)*     ***G06F 3/01*** *(2006.01)*

(86) International application number:
**PCT/US2015/065565**

(87) International publication number:
**WO 2016/118252 (28.07.2016 Gazette 2016/30)**

(54) **WELD OUTPUT CONTROL BY A WELDING VISION SYSTEM**

SCHWEISSLEISTUNGSSTEUERUNG DURCH EIN SCHWEISSSICHTSYSTEM

COMMANDE DE SOUDAGE PAR UN SYSTÈME DE VISION POUR SOUDAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.01.2015 US 201514600116**

(43) Date of publication of application:
**29.11.2017 Bulletin 2017/48**

(73) Proprietor: **Illinois Tool Works Inc.**
**Glenview, IL 60025 (US)**

(72) Inventors:
  • **BEESON, Richard**
    **Glenview, Illinois 60025 (US)**

  • **BECKER, William J.**
    **Glenview, Illinois 60025 (US)**
  • **ALBRECHT, Bruce**
    **Glenview, Illinois 60025 (US)**

(74) Representative: **Trinks, Ole**
**Meissner Bolte Patentanwälte**
**Rechtsanwälte Partnerschaft mbB**
**Postfach 10 26 05**
**86016 Augsburg (DE)**

(56) References cited:
**US-A1- 2011 006 047    US-A1- 2013 206 740**
**US-A1- 2013 291 271**

## Description

### BACKGROUND

Welding is a process that has increasingly become ubiquitous in all industries. While such processes may be automated in certain contexts, a large number of applications continue to exist for manual welding operations, the success of which relies heavily on the proper use of a welding torch by a welding operator. For instance, improper torch angle, contact tip-to-work distance, travel speed, and aim are parameters that may dictate the quality of a weld. Even experienced welding operators, however, often have difficulty monitoring and maintaining these important parameters throughout welding processes.

### BRIEF SUMMARY

Systems according to the invention are provided for weld output control by a welding vision system (see, e.g., US 2013/206740 A1). Embodiments of the present invention are further illustrated by and/or described in connection with the figures.

### BRIEF DESCRIPTION OF THE DRAWINGS

FIG. 1 shows an exemplary arc welding system in accordance with aspects of this disclosure.

FIG. 2 shows example welding equipment in accordance with aspects of this disclosure.

FIG. 3 shows example welding headwear in accordance with aspects of this disclosure.

FIG. 4 shows example circuitry of the headwear of FIG. 3.

FIGS. 5A-5C illustrate various parameters which may be determined from images of a weld in progress.

FIG. 6 is a flowchart illustrating a first example process for controlling welding equipment based on image data captured by welding headwear.

FIG. 7 is a flowchart illustrating a second example process for controlling welding equipment based on image data captured by welding headwear.

FIG. 8 is a flowchart illustrating a third example process for controlling welding equipment based on image data captured by welding headwear.

FIG. 9 is a flowchart illustrating a fourth example process for controlling welding equipment based on image data captured by welding headwear.

FIG. 10 illustrates control of welding equipment using image data captured by welding headwear in combination with movement of the welding headwear.

### DETAILED DESCRIPTION

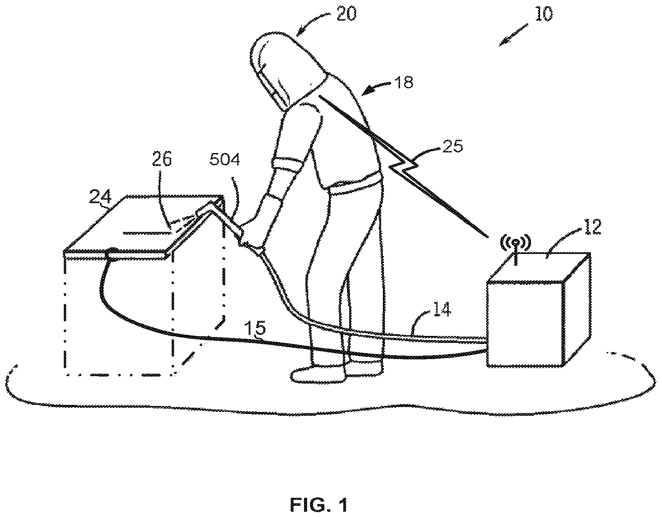

Referring to FIG. 1, there is shown an example welding system 10 in which an operator 18 is wearing welding headwear 20 and welding a workpiece 24 using a torch 504 to which power or fuel is delivered by equipment 12 via conduit 14 (for electrical welding conduit 15 provides the return path). The equipment 12 comprises a power source, optionally a source of an inert shield gas and, where wire/filler material is to be provided automatically, a wire feeder. The welding system 10 of FIG. 1 may be configured to form a weld joint 512 by any known arc welding technique, including electric welding techniques such as shielded metal arc welding (i.e., stick welding), metal inert gas welding (MIG), flux cored arc welding (FCAW) and tungsten inert gas welding (TIG). TIG welding may involve no external filler metal or may involve manual, automated or semi-automated external metal filler.

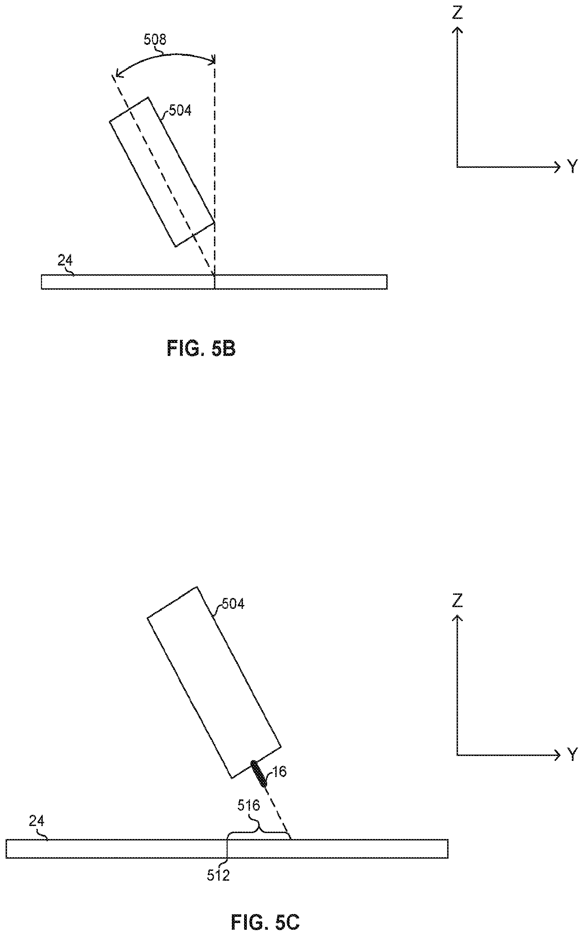

Optionally in any embodiment, the welding equipment 12 may be arc welding equipment that provides a direct current (DC) or alternating current (AC) to a consumable or non-consumable electrode 16 (better shown, for example, in FIG. 5C) of a torch 504, which may be a TIG torch, a MIG or flux cored torch (commonly called a MIG "gun"), or a stick electrode holder (commonly called a "stinger"). The electrode 16 delivers the current to the point of welding on the workpiece 24. In the welding system 10, the operator 18 controls the location and operation of the electrode 16 by manipulating the torch 504 and triggering the starting and stopping of the current flow. When current is flowing, an arc 26 is developed between the electrode and the workpiece 24. The conduit 14 and the electrode 16 thus deliver current and voltage sufficient to create the electric arc 26 between the electrode 16 and the workpiece. The arc 26 locally melts the workpiece 24 and welding wire or rod supplied to the weld joint 512 (the electrode 16 in the case of a consumable electrode or a separate wire or rod in the case of a non-consumable electrode) at the point of welding between electrode 16 and the workpiece 24, thereby forming a weld joint 512 when the metal cools.

As shown, and described more fully below, the equipment 12 and headwear 20 communicate via a link 25 via which the headwear 20 controls settings of the equipment 12 and the equipment 12 may provide information about its settings to the headwear 20. Although a wireless link is shown, the link may be wireless, wired, or optical.

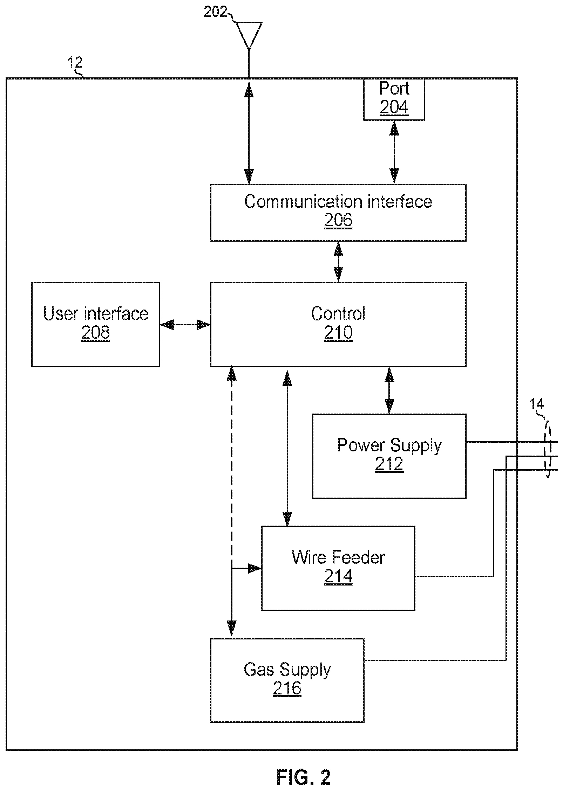

FIG. 2 shows example welding equipment in accordance with aspects of this disclosure. The equipment 12 of FIG. 2 comprises an antenna 202, a communication port 204, communication interface circuitry 206, user interface module 208, control circuitry 210, power supply circuitry 212, wire feeder module 214, and gas supply module 216.

The antenna 202 may be any type of antenna suited for the frequencies, power levels, etc. used by the communication link 25.

The communication port 204 may comprise, for example, an Ethernet over twisted pair port, a USB port, an HDMI port, a passive optical network (PON) port, and/or any other suitable port for interfacing with a wired or optical cable.

The communication interface circuitry 206 is operable to interface the control circuitry 210 to the antenna 202 and/or port 204 for transmit and receive operations. For transmit, the communication interface 206 may receive data from the control circuitry 210 and packetize the data and convert the data to physical layer signals in accordance with protocols in use on the communication link 25. For receive, the communication interface may receive physical layer signals via the antenna 202 or port 204, recover data from the received physical layer signals (demodulate, decode, etc.), and provide the data to control circuitry 210.

The user interface module 208 may comprise electromechanical interface components (e.g., screen, speakers, microphone, buttons, touchscreen, etc.) and associated drive circuitry. The user interface 208 may generate electrical signals in response to user input (e.g., screen touches, button presses, voice commands, etc.). Driver circuitry of the user interface module 208 may condition (e.g., amplify, digitize, etc.) the signals and them to the control circuitry 210. The user interface 208 may generate audible, visual, and/or tactile output (e.g., via speakers, a display, and/or motors/actuators/servos/etc.) in response to signals from the control circuitry 210.

The control circuitry 210 comprises circuitry (e.g., a microcontroller and memory) operable to process data from the communication interface 206, the user interface 208, the power supply 212, the wire feeder 214, and/or the gas supply 216; and to output data and/or control signals to the communication interface 206, the user interface 208, the power supply 212, the wire feeder 214, and/or the gas supply 216.

The power supply circuitry 212 comprises circuitry for generating power to be delivered to a welding electrode via conduit 14. The power supply circuitry 212 may comprise, for example, one or more voltage regulators, current regulators, inverters, and/or the like. The voltage and/or current output by the power supply circuitry 212 is controlled by a control signal from the control circuitry 210. The power supply circuitry 212 may also comprise circuitry for reporting the present current and/or voltage to the control circuitry 210. In an example implementation, the power supply circuitry 212 may comprise circuitry for measuring the voltage and/or current on the conduit 14 (at either or both ends of the conduit 14) such that reported voltage and/or current is actual and not simply an expected value based on calibration.

The wire feeder module 214 is configured to deliver a consumable wire electrode 16 to the weld joint 512. The wire feeder 214 may comprise, for example, a spool for holding the wire, an actuator for pulling wire off the spool to deliver to the weld joint 512, and circuitry for controlling the rate at which the actuator delivers the wire. The actuator may be controlled based on a control signal from the control circuitry 210. The wire feeder module 214 may also comprise circuitry for reporting the present wire speed and/or amount of wire remaining to the control circuitry 210. In an example implementation, the wire feeder module 214 may comprise circuitry and/or mechanical components for measuring the wire speed, such that reported speed is actual and not simply an expected value based on calibration. For TIG or Stick welding, the wire feeder 214 may not be used (or may not even be present in the equipment 12).

The gas supply module 216 is configured to provide shielding gas via conduit 14 for use during the welding process. The gas supply module 216 may comprise an electrically controlled valve for controlling the rate of gas flow. The valve may be controlled by a control signal from control circuitry 210 (which may be routed through the wire feeder 214 or come directly from the control 210 as indicated by the dashed line). The gas supply module 216 may also comprise circuitry for reporting the present gas flow rate to the control circuitry 210. In an example implementation, the gas supply module 216 may comprise circuitry and/or mechanical components for measuring the gas flow rate such that reported flow rate is actual and not simply an expected value based on calibration.

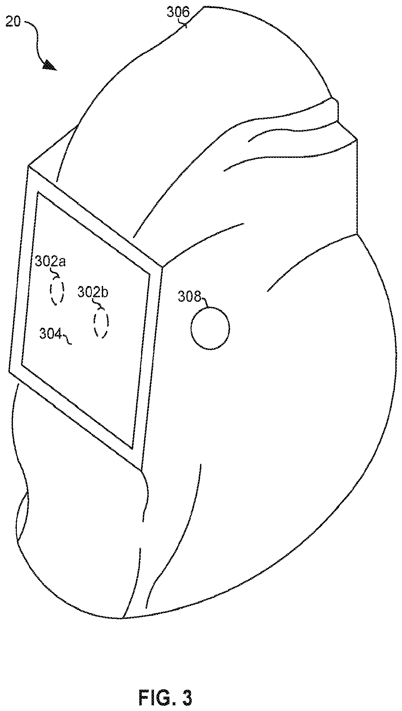

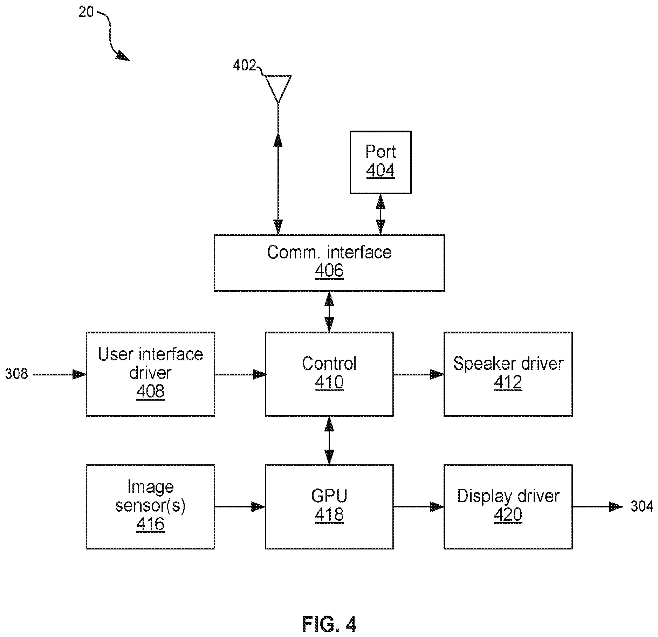

FIGS. 3 and 4 show example welding headwear in accordance with aspects of this disclosure. The example headwear 20 is a helmet comprising a shell 306 in or to which are mounted: one or more cameras comprising optical components 302 and image sensor(s) 416, a display 304, electromechanical user interface components 308, an antenna 402, a communication port 404, a communication interface 406, user interface driver circuitry 408, control circuitry 410 (e.g., a microcontroller and memory), speaker driver circuitry 412, graphics processing unit (GPU) 418, and display driver circuitry 420. In other embodiments, the headwear may be a mask or goggles rather than a helmet, for example.

Each set of optics 302 may comprise, for example, one or more lenses, filters, and/or other optical components for capturing electromagnetic waves in the spectrum ranging from, for example, infrared to ultraviolet. In an example implementation, optics 302a and 302b for two cameras may be positioned approximately centered with the eyes of a wearer of the helmet 20 to capture stereoscopic images (at any suitable frame rate ranging from still photos to video at 30 fps, 100 fps, or higher) of the field of view that a wearer of the helmet 20 would have if looking through a lens.

The display 304 may comprise, for example, a LCD, LED, OLED. E-ink, and/or any other suitable type of display operable to convert electrical signals into optical signals viewable by a wearer of the helmet 20.

The electromechanical user interface components 308 may comprise, for example, one or more touchscreen elements, speakers, microphones, physical buttons, etc. that generate electric signals in response to user input. For example, electromechanical user interface components 308 may comprise capacity, inductive, or resistive touchscreen sensors mounted on the back of the display 304 (i.e., on the outside of the helmet 20) that enable a wearer of the helmet 20 to interact with user interface elements displayed on the front of the display 304 (i.e., on the inside of the helmet 20). In an example implementation, the optics 302, image sensors 416, and GPU 418 may operate as user interface components 308 by allowing a user to interact with the helmet 20 through, for example, hand gestures captured by the optics 302 and images sensors 416 and then interpreted by the GPU 418. For example, a gesture such as would be made to turn a knob clockwise may be interpreted to generate a first signal while a gesture such as would be made to turn a knob counterclockwise may be interpreted to generate a second signal.

The antenna 402 may be any type of antenna suited for the frequencies, power levels, etc. used by the communication link 25.

The communication port 404 may comprise, for example, an Ethernet over twisted pair port, a USB port, an HDMI port, a passive optical network (PON) port, and/or any other suitable port for interfacing with a wired or optical cable.

The communication interface circuitry 406 is operable to interface the control circuitry 410 to the antenna 202 and port 204 for transmit and receive operations. For transmit, the communication interface 406 may receive data from the control circuitry 410 and packetize the data and convert the data to physical layer signals in accordance with protocols in use on the communication link 25. The data to be transmitted comprise, for example, control signals for controlling the equipment 12. For receive, the communication interface may receive physical layer signals via the antenna 202 or port 204, recover data from the received physical layer signals (demodulate, decode, etc.), and provide the data to control circuitry 410. The received data may comprise, for example, indications of present settings and/or actual measured output of the equipment 12. For electric welding this may comprise, for example, voltage, amperage, and/or wire speed settings and/or measurements.

The user interface driver circuitry 408 is operable to condition (e.g., amplify, digitize, etc.) signals from the user interface component(s) 308.

The control circuitry 410 is operable to process data from the communication interface 406, the user interface driver 408, and the GPU 418, and to generate control and/or data signals to be output to the speaker driver circuitry 412, the GPU 418, and the communication interface 406. Signals output to the communication interface 406 comprise, for example, signals to control settings of equipment 12. Such signals may be generated based on signals from the GPU 418 and/or the user interface driver 408. Signals from the communication interface 406 may comprise, for example, indications (received via link 25) of present settings and/or actual measured output of the equipment 12. Signals to the GPU 418 may comprise, for example, signals to control graphical elements of a user interface presented on display 304. Signals from the GPU 418 may comprise, for example, information determined based on analysis of pixel data captured by images sensors 416. Memory of the control circuitry 410 may store, for example, lookup tables that correlate measured welding parameters to corresponding equipment settings for determined.

The speaker driver circuitry 412 is operable to condition (e.g., convert to analog, amplify, etc.) signals from the control circuitry 410 for output to one or more speakers of the user interface components 308. Such signals may, for example, carry audio to alert a wearer of the helmet 20 that a welding parameter is out of tolerance, to provide audio instructions to the wearer of the helmet 20, etc. For example, if the travel speed of the torch is determined to be too slow, such an alert may comprise a voice saying "too slow."

The image sensor(s) 416 may comprise, for example, CMOS or CCD image sensors operable to convert optical signals to digital pixel data and output the pixel data to GPU 418.

The graphics processing unit (GPU) 418 is operable to receive and process pixel data (e.g., of stereoscopic or two-dimensional images) from the image sensor(s) 416, to output one or more signals to the control circuitry 410, and to output pixel data to the display 304. The GPU 418 may comprise memory for buffering pixel data that it processes.

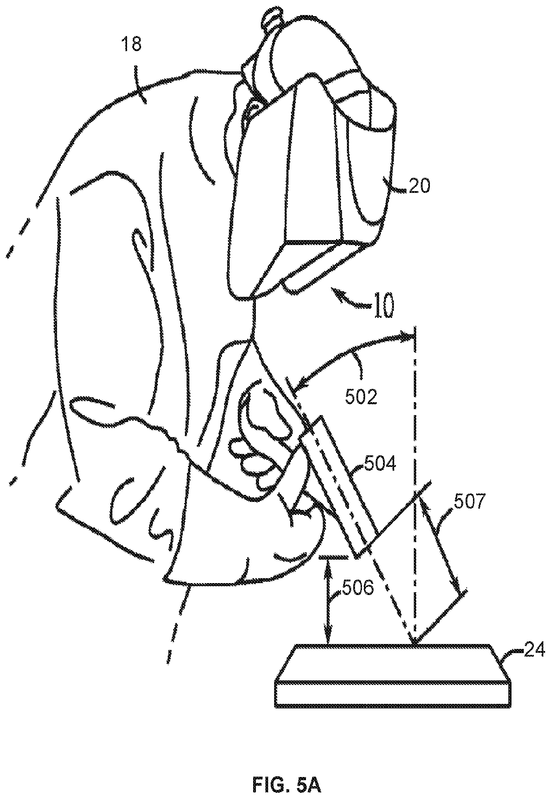

The processing of pixel data by the GPU 418 may comprise, for example, analyzing the pixel data to determine, in real-time (e.g., with latency less than 100ms or, more preferably, less than 20ms, or more preferably still, less than 5ms), one or more of the following: name, size, part number, type of metal, or other characteristics of the workpiece 24; name, size, part number, type of metal, or other characteristics of the torch 504, electrode 16, and/or filler material; type or geometry of joint 512 to be welded; 2-D or 3-D position of items (e.g., torch, electrode, workpiece, etc.) in the captured field of view, one or more weld parameters (e.g., such as those described below with reference to FIG. 5) for an in-progress weld in the field of view; measurements of one or more items in the field of view (e.g., size of a joint or workpiece being welded, size of a bead formed during the weld, size of a weld puddle formed during the weld, and/or the like); and/or any other information which may be gleaned from the pixel data and which may be helpful in achieving a better weld, training the operator, calibrating the system 10, etc.

The information output from the GPU 418 to the control circuitry 410 comprises the information determined from the pixel analysis.

The pixel data output from the GPU 418 to the display 304 may provide a mediated reality view for the wearer of the helmet 20. In such a view, the wearer experiences the video presented on the display 304 as if s/he is looking through a lens, but with the image enhanced and/or supplemented by an on-screen display. The enhancements (e.g., adjust contrast, brightness, saturation, sharpness, etc.) may enable the wearer of the helmet 20 to see things s/he could not see with simply a lens. The on-screen display may comprise text, graphics, etc. overlaid on the video to provide visualizations of equipment settings received from the control circuit 410 and/or visualizations of information determined from the analysis of the pixel data.

The display driver circuitry 420 is operable to generate control signals (e.g., bias and timing signals) for the display 304 and to condition (e.g., level control synchronize, packetize, format, etc.) pixel data from the GPU 418 for conveyance to the display 304.

FIGS. 5A-5C illustrate various parameters which may be determined from images of a weld in progress. Coordinate axes are shown for reference. In FIG. 5A the Z axis points to the top of the paper, the X axis points to the right, and the Y axis points into the paper. In FIGS. 5B and 5C, the Z axis points to the top of the paper, the Y axis points to the right, and the X axis points into the paper.

In FIGS. 5A-5C, the equipment 12 comprises a MIG gun 504 that feeds a consumable electrode 16 to a weld joint 512 of the workpiece 24. During the welding operation, a position of the MIG gun 504 may be defined by parameters including: contact tip-to-work distance 506 or 507, a travel angle 502, a work angle 508, a travel speed 510, and aim.

Contact tip-to-work distance may include the vertical distance 506 from a tip of the torch 504 to the workpiece 24 as illustrated in FIG. 5A. In other embodiments, the contact tip-to-work distance may be the distance 507 from the tip of the torch 504 to the workpiece 24 at the angle of the torch 504 to the workpiece 24).

The travel angle 502 is the angle of the torch 504 and/or electrode 16 along the axis of travel (X axis in the example shown in FIGS. 5A-5C).

The work angle 508 is the angle of the torch 504 and/or electrode 16 perpendicular to the axis of travel (Y axis in the example shown in FIGS. 5A-5C).

The travel speed is the speed at which the torch 504 and/or electrode 16 moves along the joint 512 being welded.

The aim is a measure of the position of the electrode 16 with respect to the joint 512 to be welded. Aim may be measured, for example, as distance from the center of the joint 512 in a direction perpendicular to the direction of travel. FIG. 5C, for example, depicts an example aim measurement 516.

According to the invention, arc brightness is used to measure one or more of the welding parameters (e.g., based on a known relationship between the parameter(s), the present equipment settings, and arc brightness), and/or arc brightness is used instead of, or as a proxy for, one or more of the welding parameters. Arc brightness is determined from captured pixel values (e.g., in RGB or YUV color space) based on, for example, a known relationship between arc brightness and one or more of known ambient lighting conditions, characteristics of the optics 302, and characteristics of the image sensor(s) 416. For example, upon analyzing captured pixel data and determining the arc to be too bright, the helmet 202 sends an equipment control signal to decrease current and optionally to increase wire speed, whereas a signal to decrease current and optionally to slow wire speed is sent if the arc is too dim. In an example implementation, arc brightness may be inferred and used for controlling welding equipment even where the arc itself is not captured in the image (i.e., is not in the camera field of view). Such an inference may be possible by, for example, assuming that the arc is the primary reason for variation in brightness during the welding process.

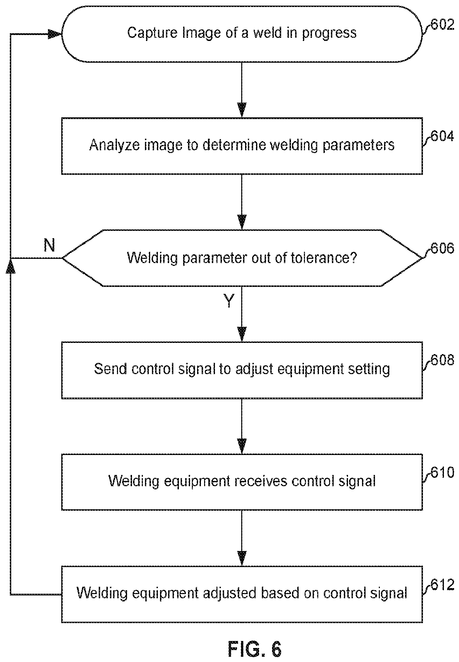

FIG. 6 is a flowchart illustrating a first example process for controlling welding equipment settings based on image data captured by welding headwear.

In block 602, an image of a weld in progress is captures by one or more cameras comprising optics 302 and image sensor(s) 416 of headwear 20. The captured image may include the torch, the workpiece, the joint to be welded, the arc during welding, the puddle during welding, and/or any portion of one or more thereof. The image may be stored to memory in headwear 20 and/or to external memory via the communication interface 406.

In block 604, pixel data of the image is processed by GPU 418 to determine one or more welding parameters of the weld in progress. The welding parameters may be stored to memory in headwear 20 and/or to external memory via the communication interface 406.

In block 606, the control circuitry 410 determines whether one or more of the determined welding parameters are outside of a determined tolerance for the weld. The tolerances may be stored in memory of the headwear 20 after, for example, being downloaded from a database via the communication interface. If not, then the process returns to block 602. If one or more of the welding parameters is outside of a determined tolerance, then the process advances to block 608.

In block 608, control circuitry 410 generates a signal carrying an instruction to adjust one or more settings of the welding equipment 12 that is being used to perform the weld. The signal is transmitted via the link 25. A log of the equipment settings may be stored in memory of the welding headwear 12, in memory of the equipment 12, and/or in a network accessible database.

In block 610, the welding equipment 12 receives the signal vial link 25 and process the signal to recover the instruction.

In block 612, the welding equipment 12 adjusts one or more settings based on the received instruction. For electric welding the settings comprise current and/or voltage and optionally wire speed.

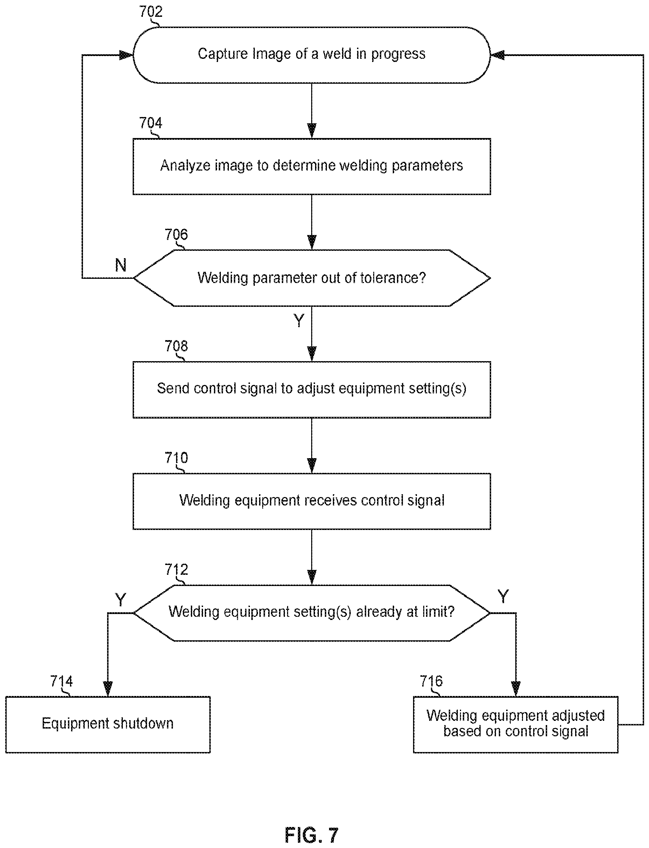

FIG. 7 is a flowchart illustrating a second example process for controlling welding equipment based on image data captured by welding headwear.

In block 702, an image of a weld in progress is captures by one or more cameras comprising optics 302 and image sensor(s) 416 of headwear 20.

In block 704, pixel data of the image is processed by GPU 418 to determine one or more welding parameters of the weld in progress.

In block 706, the control circuitry 410 determines whether one or more of the determined welding parameters are outside of a determined tolerance for the weld. If not, then the process returns to block 702. If one or more of the welding parameters is outside of a determined tolerance, then the process advances to block 708.

In block 708, control circuitry 410 generates a signal carrying an instruction to adjust one or more settings of the welding equipment 12 that is being used to perform the weld. The signal is transmitted via the link 25. In an example embodiment, block 708 may also comprise presenting audible and/or visual indications of the determined welding parameters and/or presenting audible and/or visual alerts that one or more parameters are out-of-tolerance. The indications and/or alerts may be presented via the display 304 and/or speakers of the helmet 20 and/or may be sent to an external display and/or speakers (e.g., to alert an instructor, supervisor, or the like).

In block 710, the welding equipment 12 receives the signal vial link 25 and process the signal to recover the instruction.

In block 712, control circuitry 210 of the welding equipment 12 determines whether settings attempting to be adjusted are already at determined limits (e.g., absolute limits of the equipment 12 and/or user-defined limits programmed into the equipment 12). If a setting to be adjusted is already at its limit, then the process advances to block 714. If no setting to be adjusted is already at its limit, then the process advances to block 716.

In block 714, since the setting(s) can be adjusted no further to compensate for the out-of-tolerance parameters, the welding equipment 12 disables output of power to the electrode 16 to prevent a bad weld from doing serious damage to the workpiece 24.

In block 716, the control circuitry 210 generates one or more control signal to adjust the settings as indicated by the instruction received from the headwear 20.

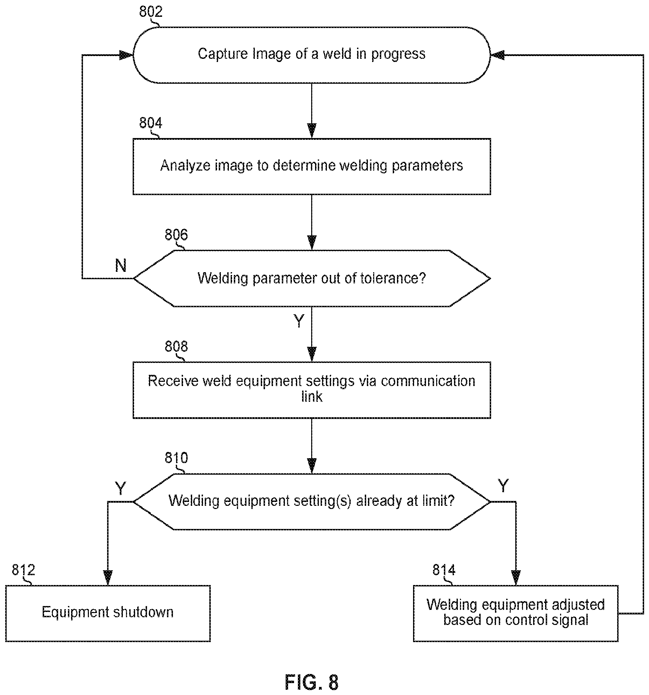

FIG. 8 is a flowchart illustrating a third example process for controlling welding equipment based on image data captured by welding headwear.

In block 802, an image of a weld in progress is captures by one or more cameras comprising optics 302 and image sensor(s) 416 of headwear 20.

In block 804, pixel data of the image is processed by GPU 418 to determine one or more welding parameters of the weld in progress.

In block 806, the control circuitry 410 determines whether one or more of the determined welding parameters are outside of a determined tolerance for the weld. If not, then the process returns to block 702. If one or more of the welding parameters is outside of a determined tolerance, then the process advances to block 808.

In block 808 the current settings of the welding equipment 12 are received by control circuitry 410 via link 25.

In block 810, control circuitry 410 of the headwear 20 determines whether settings of the equipment 12 can be adjusted to compensate for the out-of-tolerance parameters. For example, if one or more settings is already at the limit of its range and cannot be adjusted further, or if the parameters is so far out-of-tolerance that compensation through equipment settings is not possible. If not, then the process advances to block 812. If so, then the process advances to block 814.

In block 812, the welding equipment 12 disables output of power to the electrode 16 to prevent a bad weld from doing serious damage to the workpiece 24.

In block 814, the control circuitry 410 generates one or more control signals to adjust the settings of the equipment 12 and sends the signals via the antenna 402 and/or port 404.

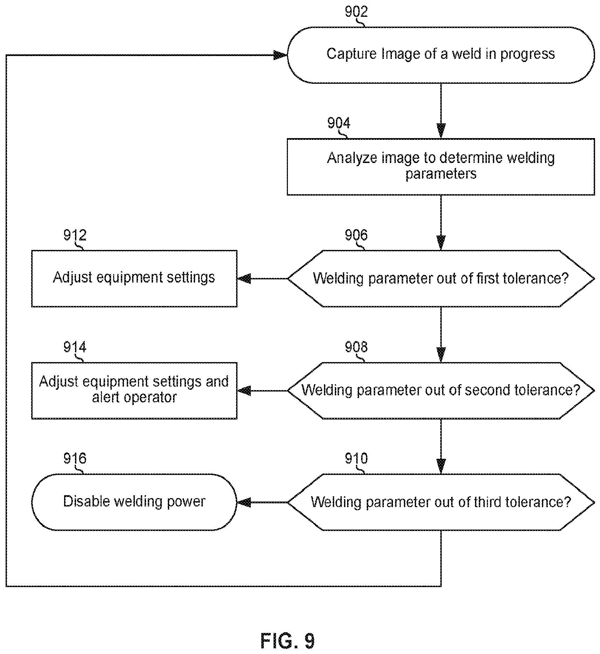

FIG. 9 is a flowchart illustrating a fourth example process for controlling welding equipment based on image data captured by welding headwear.

In block 902, an image of a weld in progress is captures by one or more cameras comprising optics 302 and image sensor(s) 416 of headwear 20.

In block 904, the captured image is analyzed (e.g., by GPU 418) to determine one or more welding parameters as they existed in the image.

In block 906, it is determined whether a welding parameter is outside of a first tolerance. The first tolerance may be a tolerance that corresponds to a high quality weld, and which only a skilled operator can manually improve upon. If the welding parameter is outside of the first tolerance, then in block 912, one or more settings of the equipment are adjusted in an attempt to bring the parameter closer to its ideal value.

Returning to block 906, if the parameter is within the first tolerance, then in block 908 it is determined whether it is within a second tolerance. The second tolerance may be an intermediate tolerance that will still result in an acceptable weld, but which an operator can readily improve upon. If the welding parameter is outside of the second tolerance, then in block 914, one or more settings of the equipment are adjusted to bring the parameter closer to its ideal value and the operator is alerted as to state of the parameter so that s/he may make adjustments to improve the parameter.

Returning to block 908, if the parameter is within the second tolerance, then in block 910 it is determined whether it is within a third tolerance. The third tolerance may be the loosest tolerance that can be met while still achieving an acceptable weld. If the welding parameter is outside of the third tolerance, then in block 916 power to the electrode may be disabled to prevent creation of an unacceptable weld (or to prevent additional time from being wasted on a part that is already ruined).

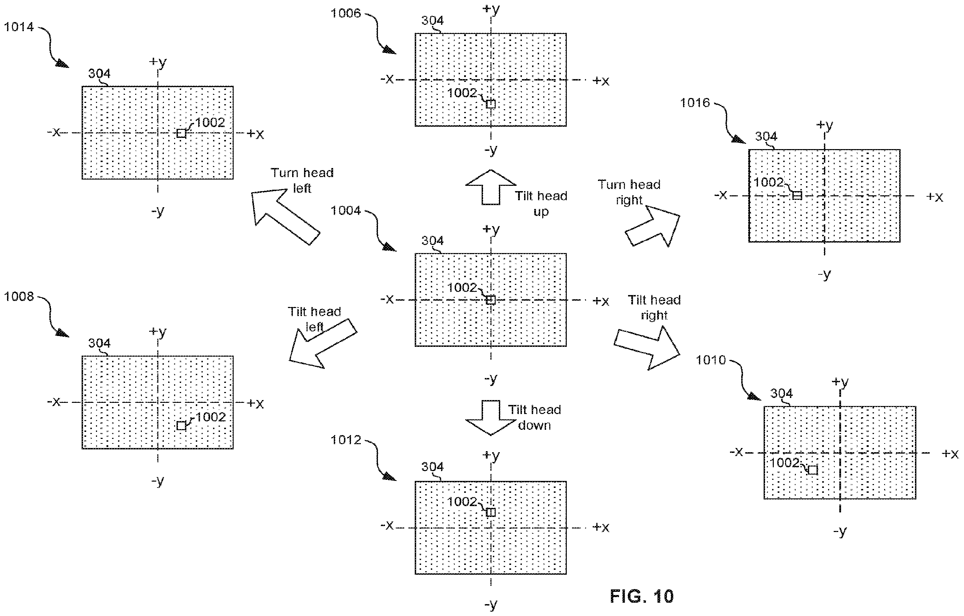

FIG. 10 illustrates control of welding equipment using image data captured by welding headwear in combination with movement of the welding headwear. Shown in FIG. 10 are multiple screen captures of the display 304 while a welding operation is in progress. In FIG. 10, an image processing algorithm performed by GPU 418 enabled detection of the pixel(s) corresponding to the welding arc. For example, the brightest pixel(s) in a region where the arc is expected to be (e.g., during normal viewing the arc may be expected to be relatively close to the center of the field of view of welder 18) may be determined to be the arc. In FIG. 10, the pixel(s) determined to correspond to the arc are labeled 1002.

In FIG. 10, the view 1004 (with the arc at the center of the display) is assumed to be the baseline/reference. In another example implementation, the baseline/reference may be a location other than the center of the display and may be, for example, the location of the arc when it is initially struck or the location of the arc when the welder 18 gives a command (e.g., tactile or voice) to set the arc reference point. If welder 18 tilts his/her head up, the result is screen 1006 with the arc moved toward the bottom of the display. If welder 18 turns his/her head left, the result is screen 1014 with the arc moved toward the right of the display. If welder 18 turns his/her head right, the result is screen 1016 with the arc moved toward the left of the display. If welder 18 tilts his/her head down, the result is screen 1012 with the arc moved toward the top of the display. If welder 18 tilts his/her head left, the result is screen 1008 with the arc moved to the bottom and right of the display. If welder 18 tilts his/her head right, the result is screen 1010 with the arc moved to the bottom and left of the display.

An image processing algorithm implemented by GPU 418 may be operable to detect movement of the arc in the field of view and generate corresponding welding equipment control signals. The GPU 418 may be operable to monitor the position of the arc in the field of view.

Arc position may be used to directly control equipment settings. For example, Current, voltage, and/or wire speed of the equipment 12 may be varied based on movement of the arc relative to the baseline/reference. For example, current may be varied according to the relationship $\sqrt{(x_0 - x)^2 + (y_0 - y)^2}$ , where G is a determined gain factor, $(x_0,y_0)$ is the baseline/reference location of the arc and (x,y) is the current location of the arc.

Additionally, or alternatively, arc position may be used to detect head gestures which, in turn, control equipment settings. The GPU 418 may be operable to monitor the position of the arc in the field of view and discriminate whether the location of the arc has changed due to an intentional head gesture or due to other reasons. For example, during normal welding, the position arc may be relatively table near the center of the display. Accordingly, relatively quick movements of the arc and/or specific patterns of movements of the arc may be detectable as head gestures intended to generate a control signal. For example, quick tilt to the left and back may generate a signal to decrease an equipment setting whereas a quick tilt to the right and back may generate a signal to increase the same equipment setting.

In accordance with the invention as disclosed in claim 1, a system comprises welding equipment providing power for forming a weld (e.g., equipment 12), a welding headwear, one or more image sensors (e.g., 416), processing circuitry (e.g., control circuitry 410 and GPU 418), and communication interface circuitry (e.g., 406). The one or more image sensors are operable to capture an image of a weld in progress. The processing circuitry is operable to, while the weld is in progress, analyze pixel data of the said image to determine a brightness of a welding arc, wherein said processing circuitry is further operable to generate, while said weld is in progress, a welding equipment control signal to cause a welding equipment to change at least one of a welding voltage, or a welding current based on said brightness of said welding arc, and output, while said weld is in progress, the generated welding equipment control signal via the communication interface circuit. The image sensor(s), processing circuitry, and communication interface circuitry are integrated into welding headwear (e.g., the helmet 20). Additionally, or alternatively, one or more of the image sensor(s) may be mounted to a jig and/or a test fixture, for example. The welding equipment control signal controls a voltage and/or amperage output by welding power source while the weld is in progress. The processing circuitry may be operable to determine, from the analysis of the pixel data, travel speed of a torch (e.g., 04) being used for the weld, and vary the welding equipment control signal to vary the voltage and/or amperage to compensate for variations in the travel speed. The processing circuitry may be operable to determine, from the analysis of the pixel data, contact tip-to-work distance for the weld, and vary the welding power source control signal to vary the voltage and/or amperage to compensate for variations in the contact tip-to-work distance. The welding equipment may comprise a wire feeder (e.g., 214) and the welding equipment control signal may control a speed at which wire is supplied to the weld by the wire feeder. The processing circuitry may be operable to determine, from the analysis of the pixel data, a travel speed of a torch (e.g., 504) being used for the weld, and vary the welding equipment control signal to vary the speed at which wire is supplied to compensate for variations in the travel speed. The processing circuitry may be operable to determine, from the analysis of the pixel data, of a contact tip-to-work distance for the weld, and vary the welding equipment control signal to vary the speed at which wire is supplied to compensate for variations in the a contact tip-to-work distance. The processing circuitry is operable to determine, from the analysis of the pixel data, a welding parameter for the weld in progress. The processing circuitry may be operable to, upon detecting that the welding parameter (e.g., travel speed, work angle, travel angle, aim, and contact tip-to-work distance) is outside of a determined tolerance, vary the welding power source control signal adjust setting of the welding equipment in an attempt to compensate for the out-of-tolerance parameter, alert an operator as to the out-of-tolerance parameter, and/or disable power to the torch to prevent a bad weld. The system may comprise a display that is operable to output the captured images to an operator in real time (e.g., with less than 100ms or, more preferable, less than 20ms latency). The processing circuitry may be operable to receive, via the communication interface circuitry, current settings of the welding equipment and generate a welding equipment control signal based on the current settings.

The present systems are realized in a combination of hardware and software. The present systems may be realized in a centralized fashion in at least one computing system, or in a distributed fashion where different elements are spread across several interconnected computing systems. Any kind of computing system or other apparatus adapted for carrying out the methods described herein is suited. A typical combination of hardware and software may include a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein.

While the present system has been described with reference to certain implementations, it will be understood by those skilled in the art that various changes may be made and equivalents may be substituted without departing from the scope of the present system as disclosed in the appended claims. In addition, many modifications may be made to adapt a particular situation or material to the teachings of the present disclosure without departing from its scope. Therefore, it is intended that the present system not be limited to the particular implementations disclosed, but that the present system will include all implementations falling within the scope of the appended claims.

As utilized herein the terms "circuits" and "circuitry" refer to physical electronic components (i.e. hardware) and any software and/or firmware ("code") which may configure the hardware, be executed by the hardware, and or otherwise be associated with the hardware. As used herein, for example, a particular processor and memory may comprise a first "circuit" when executing a first set of one or more lines of code and may comprise a second "circuit" when executing a second set of one or more lines of code. As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g. and for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by a user-configurable setting, factory trim, etc.).

**Claims**

1. A system comprising:

   - welding equipment (12) providing power for forming a weld (512);
   - welding headwear
   - one or more image sensors (416), processing circuitry (410, 418), and communication interface circuitry (406), wherein:

      - said one or more image sensors (416) are operable to capture an image of a weld (512) in progress;
      - said processing circuitry (410, 418) is operable to perform an analysis of pixel data of said image to determine a brightness of a welding arc (26) of said weld (512) in progress;

      **characterized in that**
      said processing circuitry (410, 418) is further operable to
      - generate, while said weld (512) is in progress, a welding equipment control signal to cause a welding equipment (12) to change at least one of a welding voltage, or a welding current based on said brightness of said welding arc (26); and
      - output, while said weld (512) is in progress, said welding equipment control signal via said communication interface circuitry (406),

wherein said one or more image sensors (416), said processing circuitry (410, 418), and said communication interface circuitry (406) are integrated into said welding headwear (20).

2. The system of claim 1,
wherein said processing circuitry (410, 418) is operable to:

- determine, from said analysis of said pixel data, the travel speed of a torch (504) being used for said weld (512); and
- vary said welding equipment control signal to vary said one or both of a voltage and an amperage to compensate for variations in said travel speed.

3. The system of claim 1 or 2,
wherein said processing circuitry (410, 418) is operable to:

- determine, from said analysis of said pixel data, the contact tip-to-work distance (506, 507) for said weld (512); and
- vary said welding equipment (12) control signal to vary said one or both of a voltage and an amperage to compensate for variations in said contact tip-to-work distance (506, 507).

4. The system of one of the preceding claims, wherein:

- said welding equipment (12) comprises a wire feeder (214); and
- said welding equipment control signal controls the speed at which wire is supplied for said weld (512) by said wire feeder (214).

5. The system of one of the preceding claims,
wherein said processing circuitry (410, 418) is operable to:

- determine, from said analysis of said pixel data, the travel speed (510) of an torch (504) being used for said weld (512); and
- vary said welding equipment control signal to vary said speed (510) at which wire is supplied to compensate for variations in said travel speed.

6. The system of one of the preceding claims,
wherein said processing circuitry (410, 418) is operable to:

- determine, from said analysis of said pixel data, a contact tip-to-work distance (506, 507) for said weld (512); and
- vary said welding equipment (12) control signal to vary said speed (510) at which wire is supplied to compensate for variations in said contact tip-to-work distance (506, 507).

7. The system of one of the preceding claims,
wherein said analysis of said pixel data of said image comprises determination of one or both of: brightness of a welding arc (26), and position of said welding arc (26) within said image.

8. The system of one of the preceding claims,
wherein said processing circuitry (410, 418) is operable to determine, from said analysis of said pixel data, a welding parameter for said weld (512) in progress.

9. The system of claim 8,
wherein said processing circuitry (410, 418) is operable to, upon detecting that said welding parameter is outside of a determined tolerance, vary said welding equipment control signal.

10. The system of claim 8 or 9,
wherein said processing circuitry (410, 418) is operable to, upon detecting that said welding parameter is outside of a determined tolerance, generate one or more of an audible warning, a visual warning, and a tactile warning, and/ or
wherein said processing circuitry (410, 418) is operable to, upon detecting that said welding parameter is outside of a determined tolerance, trigger a shutdown of said welding equipment (12).

11. The system of one of claims 8 to 10,
wherein said processing circuitry (410, 418) is operable to:

- store said pixel data to memory;
- store said determined welding parameter to memory; and
- compare said welding parameter to a determined tolerance stored in memory.

12. The system of one of claims 7 to 11,
wherein said welding parameter comprises one of: travel speed (510), work angle (508), travel angle (502), aim, and contact tip-to-work distance (506, 507).

13. The system of one of the preceding claims,
wherein said communication interface circuitry (406) is operable to communicate via conductive, optical, or wireless communication media.

14. The system of one of the preceding claims,
comprising a display (304) operable to present, in real-time, said captured image.

15. The system of one of the preceding claims, wherein said processing circuitry (410, 418) is operable to receive, via said communication interface circuitry (406), present settings of said welding equipment (12), wherein said generation of said welding equipment (12) control signal is based on said present settings of said welding equipment (12).


**Patentansprüche**

1. System, umfassend:

- eine Schweißausrüstung (12), die einen Strom zum Bilden einer Schweißverbindung (512) bereitstellt;
- eine Schweißkopfbedeckung;
- einen oder mehrere Bildsensoren (416), eine Verarbeitungsschaltung (410, 418) und eine Kommunikationsschnittstellenschaltung (406), wobei:

- der eine oder die mehreren Bildsensoren (416) funktionsfähig sind zum Erfassen eines Bildes einer in Arbeit befindlichen Schweißverbindung (512);
- wobei die Verarbeitungsschaltung (410, 418) funktionsfähig ist zum Ausführen einer Analyse von Pixeldaten des Bildes, um eine Helligkeit des Schweißlichtbogens (26) der in Arbeit befindlichen Schweißverbindung (512) zu ermitteln;

**dadurch gekennzeichnet, dass**
die Verarbeitungsschaltung (410, 418) außerdem funktionsfähig ist zum:

- Erzeugen, während sich die Schweißverbindung (512) in Arbeit befindet, eines Schweißausrüstungssteuersignals, um eine Schweißausrüstung (12) zu veranlassen, mindestens Eine oder Einen von einer Schweißspannung oder einem Schweißstrom aufgrund der Helligkeit des Schweißlichtbogens (26) zu verändern; und
- Ausgeben, während sich die Schweißverbindung (512) in Arbeit befindet, des Schweißausrüstungssteuersignals über die Kommunikationsschnittstellenschaltung (406),

wobei der eine oder die mehreren Bildsensoren (416), die Verarbeitungsschaltung (410, 418) und die Kommunikationsschnittstellenschaltung (406) in die Schweißkopfbedeckung (20) integriert sind.

2. System nach Anspruch 1, wobei die Verarbeitungsschaltung (410, 418) funktionsfähig ist zum:

- Ermitteln, aus der Analyse der Pixeldaten, der Bewegungsgeschwindigkeit eines Schweißbrenners (504), der für die Schweißverbindung (512) verwendet wird; und
- Variieren des Schweißausrüstungssteuersignals, um die Eine oder den Einen oder Beide einer Spannung und eines Stroms zu variieren, um Variationen bei der Bewegungsgeschwindigkeit zu kompensieren.

3. System nach Anspruch 1 oder 2, wobei die Verarbeitungsschaltung (410, 418) funktionsfähig ist zum:

- Ermitteln, aus der Analyse der Pixeldaten, des Kontaktspitze-zu-Arbeitspunkt-Abstands (506, 507) für die Schweißverbindung (512); und
- Variieren des Steuersignals der Schweißausrüstung (12), um die Eine oder den Einen oder Beide einer Spannung und eines Stroms zu variieren, um Variationen bei dem Kontaktspitze-zu-Arbeitspunkt-Abstand (506, 507) zu kompensieren.

4. System nach einem der vorhergehenden Ansprüche, wobei:

- die Schweißausrüstung (12) eine Drahtzuführung (214) umfasst; und
- das Schweißausrüstungssteuersignal die Geschwindigkeit steuert, mit welcher der Draht durch die Drahtzuführung (214) für die Schweißverbindung (512) bereitgestellt wird.

5. System nach einem der vorhergehenden Ansprüche, wobei die Verarbeitungsschaltung (410, 418) funktionsfähig ist zum:

- Ermitteln, aus der Analyse der Pixeldaten, der Bewegungsgeschwindigkeit (510) eines Schweißbrenners (504), der für die Schweißverbindung (512) verwendet wird; und
- Variieren des Schweißausrüstungssteuersignals, um die Geschwindigkeit (510) zu variieren, mit welcher der Draht bereitgestellt wird, um Variationen bei der Bewegungsgeschwindigkeit zu kompensieren.

6. System nach einem der vorhergehenden Ansprüche, wobei die Verarbeitungsschaltung (410, 418) funktionsfähig ist zum:

- Ermitteln, aus der Analyse der Pixeldaten, eines Kontaktspitze-zu-Arbeitspunkt-Abstands (506, 507) für die Schweißverbindung (512); und

- Variieren des Steuersignals der Schweißausrüstung (12), um die Geschwindigkeit (510) zu variieren, mit welcher der Draht bereitgestellt wird, um Variationen bei dem Kontaktspitze-zu-Arbeitspunkt-Abstand (506, 507) zu kompensieren.

7. System nach einem der vorhergehenden Ansprüche,
wobei die Analyse der Pixeldaten des Bildes ein Ermitteln von Einem oder Einer oder Beiden eines Schweißlichtbogens (26) und einer Position des Schweißlichtbogens (26) innerhalb des Bildes umfasst.

8. System nach einem der vorhergehenden Ansprüche,
wobei die Verarbeitungsschaltung (410, 418) funktionsfähig ist zum Ermitteln, aus der Analyse der Pixeldaten, eines Schweißparameters für die in Arbeit befindliche Schweißverbindung (512).

9. System nach Anspruch 8,
wobei die Verarbeitungsschaltung (410, 418) funktionsfähig ist zum, nach dem Erkennen, dass der Schweißparameter außerhalb einer ermittelten Toleranz liegt, Variieren des Schweißausrüstungssteuersignals.

10. System nach Anspruch 8 oder 9,
wobei die Verarbeitungsschaltung (410, 418) funktionsfähig ist zum, nach dem Erkennen, dass der Schweißparameter außerhalb einer ermittelten Toleranz liegt, Erzeugen einer oder mehrerer einer akustischen Warnung, einer optischen Warnung und einer taktilen Warnung, und/oder
wobei die Verarbeitungsschaltung (410, 418) funktionsfähig ist zum, nach dem Erkennen, dass der Schweißparameter außerhalb einer ermittelten Toleranz liegt, Auslösen eines Abschaltens der Schweißausrüstung (12).

11. System nach einem der Ansprüche 8 bis 10,
wobei die Verarbeitungsschaltung (410, 418) funktionsfähig ist zum:

- Speichern der Pixeldaten in einem Speicher;
- Speichern des ermittelten Schweißparameters in dem Speicher; und
- Vergleichen des Schweißparameters mit einer ermittelten, in dem Speicher gespeicherten Toleranz.

12. System nach einem der Ansprüche 7 bis 11,

wobei der Schweißparameter Einen umfasst von: einer Bewegungsgeschwindigkeit (510), einem Arbeitswinkel (508), einem Bewegungswinkel (502), einem Ziel und einem Kontaktspitze-zu-Arbeitspunkt-Abstand (506, 507).

13. System nach einem der vorhergehenden Ansprüche, wobei die Kommunikationsschnittstellenschaltung (406) funktionsfähig ist zum Kommunizieren über leitfähige, optische oder drahtlose Kommunikationsmedien.

14. System nach einem der vorhergehenden Ansprüche,
das eine Anzeige (304) umfasst, die funktionsfähig ist zum Darstellen des erfassten Bildes in Echtzeit.

15. System nach einem der vorhergehenden Ansprüche,
wobei die Verarbeitungsschaltung (410, 418) funktionsfähig ist zum Empfangen, über die Kommunikationsschnittstellenschaltung (406), der aktuellen Einstellungen der Schweißausrüstung (12),
wobei das Erzeugen des Steuersignals der Schweißausrüstung (12) auf den aktuellen Einstellungen der Schweißausrüstung (12) beruht.

**Revendications**

1. Système comprenant :

- un équipement de soudage (12) fournissant de l'énergie pour former une soudure (512) ;
- un masque de soudeur ;
- un ou plusieurs capteurs d'image (416), un circuit de traitement (410, 418), et un circuit d'interface de communication (406), dans lequel :

- lesdits un ou plusieurs capteurs d'image (416) sont utilisables pour capturer une image d'une soudure (512) en cours ;
- ledit circuit de traitement (410, 418) est utilisable pour effectuer une analyse de données de pixels de ladite image pour déterminer une luminosité d'un arc de soudage (26) de ladite soudure (512) en cours ;
**caractérisé en ce que**
ledit circuit de traitement (410, 418) est également utilisable pour

- générer, pendant que ladite soudure (512) est en cours, un signal de commande d'équipement de soudage pour conduire un équipement de soudage (12) à modifier au moins un paramètre parmi une tension de soudage et un courant de soudage en fonction de ladite luminosité dudit arc de soudage (26) ; et

- délivrer, pendant que ladite soudure (512) est en cours, ledit signal de commande d'équipement de soudage par le biais dudit circuit d'interface de communication (406),

dans lequel lesdits un ou plusieurs capteurs d'image (416), ledit circuit de traitement (410, 418) et ledit circuit d'interface de communication (406) sont intégrés dans ledit masque de soudeur (20).

**2.** Système de la revendication 1,
dans lequel ledit circuit de traitement (410, 418) est utilisable pour :

- déterminer, à partir de ladite analyse desdites données de pixels, la vitesse de déplacement d'un chalumeau (504) utilisé pour ladite soudure (512) ; et
- faire varier ledit signal de commande d'équipement de soudage pour faire varier lesdits un ou deux paramètres parmi une tension et une intensité pour compenser des variations dans ladite vitesse de déplacement.

**3.** Système de la revendication 1 ou 2,
dans lequel ledit circuit de traitement (410, 418) est utilisable pour :

- déterminer, à partir de ladite analyse desdites données de pixels, la distance pointe de contact-pièce à souder (506, 507) pour ladite soudure (512) ; et
- faire varier ledit signal de commande de l'équipement de soudage (12) pour faire varier lesdits un ou deux paramètres parmi une tension et une intensité pour compenser des variations dans ladite distance pointe de contact-pièce à souder (506, 507).

**4.** Système d'une des revendications précédentes, dans lequel :

- ledit équipement de soudage (12) comprend un dévidoir de fil (214) ; et
- ledit signal de commande d'équipement de soudage contrôle la vitesse à laquelle du fil est fourni pour ladite soudure (512) par ledit dévidoir de fil (214).

**5.** Système d'une des revendications précédentes, dans lequel ledit circuit de traitement (410, 418) est utilisable pour :

- déterminer, à partir de ladite analyse desdites données de pixels, la vitesse de déplacement (510) d'un chalumeau (504) utilisé pour ladite soudure (512) ; et
- faire varier ledit signal de commande d'équipement de soudage pour faire varier ladite vitesse (510) à laquelle du fil est fourni pour compenser des variations dans ladite vitesse de déplacement.

**6.** Système d'une des revendications précédentes, dans lequel ledit circuit de traitement (410, 418) est utilisable pour :

- déterminer, à partir de ladite analyse desdites données de pixels, une distance pointe de contact-pièce à souder (506, 507) pour ladite soudure (512) ; et
- faire varier ledit signal de commande de l'équipement de soudage (12) pour faire varier ladite vitesse (510) à laquelle du fil est fourni pour compenser des variations dans ladite distance pointe de contact-pièce à souder (506, 507).

**7.** Système d'une des revendications précédentes, dans lequel ladite analyse desdites données de pixels de ladite image comprend la détermination d'un des paramètres suivants ou des deux : luminosité d'un arc de soudage (26), et position dudit arc de soudage (26) à l'intérieur de ladite image.

**8.** Système d'une des revendications précédentes, dans lequel ledit circuit de traitement (410, 418) est utilisable pour déterminer, à partir de ladite analyse desdites données de pixels, un paramètre de soudage pour ladite soudure (512) en cours.

**9.** Système de la revendication 8,
dans lequel ledit circuit de traitement (410, 418) est utilisable pour, lors de la détection que ledit paramètre de soudage est à l'extérieur d'une tolérance déterminer, faire varier ledit signal de commande d'équipement de soudage.

**10.** Système de la revendication 8 ou 9,
dans lequel ledit circuit de traitement (410, 418) est utilisable pour, lors de la détection que ledit paramètre de soudage est à l'extérieur d'une tolérance déterminer, générer un ou plusieurs avertissements parmi un avertissement sonore, un avertissement visuel et un avertissement tactile, et/ou
dans lequel ledit circuit de traitement (410, 418) est utilisable pour, lors de la détection que ledit paramètre de soudage est à l'extérieur d'une tolérance déterminer, déclencher un arrêt dudit équipement de soudage (12).

**11.** Système d'une des revendications 8 à 10,
dans lequel ledit circuit de traitement (410, 418) est utilisable pour :

- stocker lesdites données de pixels en mémoire ;

    - stocker ledit paramètre de soudage déterminé en mémoire ; et

    - comparer ledit paramètre de soudage à une tolérance déterminée stockée en mémoire.

**12.** Système d'une des revendications 7 à 11, dans lequel ledit paramètre de soudage en comprend un des suivants : vitesse de déplacement (510), angle de travail (508), angle de déplacement (502), visée, et distance pointe de contact-pièces à souder (506, 507).

**13.** Système d'une des revendications précédentes, dans lequel ledit circuit d'interface de communication (406) est utilisable pour communiquer par le biais de supports de communication conducteurs, optiques ou sans fil.

**14.** Système d'une des revendications précédentes, comprenant un écran (304) utilisable pour présenter, en temps réel, ladite image capturée.

**15.** Système d'une des revendications précédentes, dans lequel ledit circuit de traitement (410, 418) est utilisable pour recevoir, par le biais dudit circuit d'interface de communication (406), des réglages actuels dudit équipement de soudage (12), dans lequel ladite génération dudit signal de commande de l'équipement de soudage (12) est basée sur lesdits réglages actuels dudit équipement de soudage (12).

FIG. 1

FIG. 2

FIG. 3

20

402

Port
404

Comm. interface
406

User interface driver
408

308

Control
410

Speaker driver
412

Image sensor(s)
416

GPU
418

Display driver
420

304

FIG. 4

FIG. 5A

FIG. 5B

FIG. 5C

```
            ┌─────────────────────────────────────────────┐
    ┌──────▶│      Capture Image of a weld in progress      │╲ 602
    │        └─────────────────────────────────────────────┘
    │                            │
    │                            ▼
    │        ┌─────────────────────────────────────────────┐
    │        │   Analyze image to determine welding parameters │ 604
    │        └─────────────────────────────────────────────┘
    │                            │
    │                            ▼
    │    N  ┌─────────────────────────────────────────────┐
    ▲◀──────│      Welding parameter out of tolerance?       │ 606
    │        └─────────────────────────────────────────────┘
    │                            │ Y
    │                            ▼
    │        ┌─────────────────────────────────────────────┐
    │        │   Send control signal to adjust equipment setting │ 608
    │        └─────────────────────────────────────────────┘
    │                            │
    │                            ▼
    │        ┌─────────────────────────────────────────────┐
    │        │     Welding equipment receives control signal   │ 610
    │        └─────────────────────────────────────────────┘
    │                            │
    │                            ▼
    │        ┌─────────────────────────────────────────────┐
    └────────│ Welding equipment adjusted based on control signal │ 612
             └─────────────────────────────────────────────┘
```

**FIG. 6**

702

Capture Image of a weld in progress

704

Analyze image to determine welding parameters

706

N ◁ Welding parameter out of tolerance?

Y

708

Send control signal to adjust equipment setting(s)

710

Welding equipment receives control signal

712

Y ◁ Welding equipment setting(s) already at limit? ▷ Y

714

Equipment shutdown

716

Welding equipment adjusted based on control signal

FIG. 7

21

802

Capture Image of a weld in progress

804

Analyze image to determine welding parameters

806

N ⟨ Welding parameter out of tolerance? ⟩

Y

808

Receive weld equipment settings via communication link

810

Y ⟨ Welding equipment setting(s) already at limit? ⟩ Y

812

Equipment shutdown

814

Welding equipment adjusted based on control signal

FIG. 8

902

Capture Image of a weld in progress

904

Analyze image to determine welding parameters

912

Adjust equipment settings

906

Welding parameter out of first tolerance?

914

Adjust equipment settings and alert operator

908

Welding parameter out of second tolerance?

916

Disable welding power

910

Welding parameter out of third tolerance?

FIG. 9

FIG. 10

**EP 3 247 523 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013206740 A1